# EUROPÄISCHE PATENTSCHRIFT

(11) **EP 3 224 932 B1**
(45) Veröffentlichungstag und Bekanntmachung des Hinweises auf die Patenterteilung: **04.09.2024**
(21) Anmeldenummer: 15793707.9
(22) Anmeldetag: 04.11.2015
(51) Int. Cl.: H02K 7/10, H02K 7/06

(54) **LINEARANTRIEB, AUFWEISEND EINEN VON EINEM ELEKTROMOTOR ÜBER EINE KUPPLUNG ANTREIBBAREN SPINDELTRIEB**
LINEAR DRIVE, HAVING A SPINDLE DRIVE WHICH CAN BE DRIVEN BY AN ELECTRIC MOTOR VIA A CLUTCH
ENTRAÎNEMENT LINÉAIRE COMPRENANT UN MÉCANISME À BROCHE POUVANT ÊTRE ENTRAÎNÉ PAR UN MOTEUR ÉLECTRIQUE PAR LE BIAIS D'UN ACCOUPLEMENT

(30) Priorität: 28.11.2014 DE 102014017542
(43) Veröffentlichungstag der Anmeldung: 04.10.2017
(73) Patentinhaber: SEW-EURODRIVE GmbH & Co. KG, 76646 Bruchsal (DE)
(72) Erfinder: DITTES, Gerhard, 75053 Gondelsheim (DE); BECKER, Jürgen, 68789 St. Leon-Rot (DE)
(86) Internationale Anmeldenummer: PCT/EP2015/002210
(87) Internationale Veröffentlichungsnummer: WO 2016/082911

(56) Entgegenhaltungen:
- EP-A1- 1 714 851
- DE-A1- 1 513 750
- DE-A1- 102008 025 072
- DE-A1- 2 152 388
- US-A- 3 363 435

## Beschreibung

Die Erfindung betrifft einen Linearantrieb, aufweisend einen von einem Elektromotor über eine Kupplung antreibbare Spindeltrieb.

Aus der WO 02/21895 A2 ist bei einem Getriebe eine Welle mit integrierten Klauenabschnitten bekannt.

Aus der DE 10 2008 025 072 A1 ist als nächstliegender Stand der Technik ein Spindelmotor bekannt.

Aus der US 3 363 435 ist eine dynamoelektrische Maschine bekannt.

Aus der DE 2152388 A ist eine elektromotorgetriebene Einrichtung zur Verdrehbetätigung eines Stellorgans bekannt.

Aus der DE 1 513 750 A ist eine Antriebsvorrichtung, insbesondere für Scheibenwischer bekannt.

Aus der EP 1 714 851 A1 ist eine elektrische Leistungssteuerungsanordnung bekannt.

Der Erfindung liegt daher die Aufgabe zugrunde, einen Linearantrieb möglichst kompakt weiterzubilden.

Erfindungsgemäß wird die Aufgabe bei dem Linearantrieb nach den in Anspruch 1 angegebenen Merkmalen gelöst.

Wichtige Merkmale der Erfindung bei dem Linearantrieb sind, dass der Linearantrieb einen von einem Elektromotor über eine Kupplung angetriebenen Spindeltrieb aufweist,
wobei der Elektromotor eine mittels eines Lagers drehbar gelagerte Rotorwelle aufweist,
wobei der Spindeltrieb eine mittels einer Klauenkupplung mit der Rotorwelle, drehfest, verbundene Gewindespindel aufweist,
wobei die Kupplung ein drehfest mit der Gewindespindel verbundenes Kupplungsteil mit einem auf einen als Zentriersitz bearbeiteten Wellenstumpf der Gewindespindel aufgeschobenen, ringförmigen Grundkörper und mit axial vom Grundkörper hervorragenden ersten Klauenabschnitten aufweist,
wobei die Rotorwelle an der dem Spindeltrieb zugewandte Ende hohl ausgeführt ist, so dass sie dort einen axial nicht durchgehenden Hohlraum aufweist,
wobei die Lagerung der Gewindespindel als zweites Lager für die Rotorwelle fungiert,
wobei an der Wandung des Hohlraums nach radial innen hervorragende zweite Klauenabschnitte ausgebildet sind, welche über ein zwischengeordnetes, drehsteifes Zwischenteil im Eingriff stehen mit den ersten Klauenabschnitten des Kupplungsteils,
wobei die Rotorwelle einen Zentriersitz aufweist, in welchem die Klauenabschnitte des Kupplungsteils aufgenommen sind,
wobei die radiale Berandung des Hohlraums fein bearbeitete Flächenabschnitte aufweist, die als Zentriersitz für die Klauenabschnitte fungieren, wobei der Zentriersitz als Passitz für die Klauenabschnitte des Kupplungsteils ausgebildet sind, um das Kupplungsteil an der Rotorwelle zu zentrieren.

Von Vorteil ist dabei, dass ein kompakter und integrierter Antrieb mit kleiner Anzahl von Teilen herstellbar ist. Denn die Klauenkupplung ist in den Motor integriert. Eine separate Einhausung ist einsparbar.

Erfindungsgemäß weist also die Rotorwelle einen Zentriersitz auf, in welchem die Klauenabschnitte des Kupplungsteils aufgenommen sind,
insbesondere wobei die Rotorwelle einen Hohlraum, insbesondere einen axial nicht durchgehenden Hohlraum, aufweist, dessen radiale Berandung fein bearbeitete Flächenabschnitte aufweist, die als Zentriersitz für die Klauenabschnitte fungieren.

Erfindungsgemäß ist also der Zentriersitz als Passsitz für die Klauenabschnitte des Kupplungsteils ausgebildet,
insbesondere wobei die radiale Außenseite der Klauenabschnitte des Kupplungsteils an den fein bearbeiteten Flächenabschnitten der Berandung des Hohlraumes anliegen,
insbesondere wobei die Flächenabschnitte in Umfangsrichtung voneinander insbesondere regelmäßig beabstandet sind. Von Vorteil ist dabei, dass das Kupplungsteil und somit auch die mit ihm verbundene Gewindespindel relativ zur Rotorwelle zentriert wird mittels des Zentriersitzes. Somit ist die Lagerung der Rotorwelle über die Gewindespindel ausführbar.

Erfindungsgemäß ist also das Kupplungsteil, insbesondere der ringförmige Grundkörper des Kupplungsteils, auf einen als Zentriersitz bearbeiteten Wellenstumpf der Gewindespindel aufgeschoben. Von Vorteil ist dabei, dass der Wellenstumpf fein bearbeitbar ist und somit die Zentrierung einfach ausführbar ist.

Bei einer vorteilhaften Ausgestaltung ist das Lager als Festlager ausgeführt. Von Vorteil ist dabei, dass das Lager angestellt ist und bei thermisch bedingten Längenänderungen seine Position nicht ändert.

Bei einer vorteilhaften Ausgestaltung ist die Rotorwelle über das Lager in einem Gehäuseteil des Elektromotors drehbar gelagert und die Gewindespindel ist über weitere Lager in einem Gehäuseteil des Spindeltriebs gelagert, wobei die Gehäuseteile verbunden sind, insbesondere schraubverbunden sind. Von Vorteil ist dabei, dass geringere Verlustwärme entsteht, da die Lagerung der Gewindespindel mitnutzbar ist von der Rotorwelle. Somit sind außerdem auch Teile einsparbar. Allerdings muss die Kupplung hierzu entsprechend genau gefertigt werden und über genau bearbeitete Schnittstellen am Antrieb vorgesehen werden.

Bei einer vorteilhaften Ausgestaltung drückt ein Federelement die Rotorwelle zum Lager hin, wobei das Federelement an der Gewindespindel abgestützt ist,
insbesondere wobei die Rotorwelle eine Durchmesserstufe aufweist, gegen welche der Innenring des Lagers angestellt ist und das Gehäuseteil des Elektromotors eine Stufe aufweist, gegen welche der Außendurchmesser des Lagers angestellt ist. Von Vorteil ist dabei, dass das Anstellen mittels des Federelements einfach ausführbar ist.

Bei einer vorteilhaften Ausgestaltung fungiert die Lagerung der Gewindespindel als zweites Lager für die Rotorwelle. Von Vorteil ist dabei, dass ein zweites, direkt die Rotorwelle lagerndes Lager einsparbar ist.

Bei einer vorteilhaften Ausgestaltung ist eine mit dem Gewinde der Gewindespindel im Eingriff stehende Spindelmutter linear geführt im Gehäuseteil des Spindeltriebs und ist mit einer aus dem Gehäuse des Spindeltriebs herausragenden Kolbenstange verbunden. Von Vorteil ist dabei, dass ein einfacher kompakter Spindeltrieb bereit stellbar ist.

Bei einer vorteilhaften Ausgestaltung ist das Zwischenteil aus einem Material höherer Elastizität gefertigt als die Kupplungsabschnitte des Kupplungsteils und der Rotorwelle. Von Vorteil ist dabei, dass sehr drehsteif ausführbar ist, beispielsweise aus einem Elastomer. Außerdem gleicht das Zwischenteil den thermischen bedingten Längenausgleich der Gewindespindel und der Rotorwelle aus. Denn diese beiden metallischen Teile sind beide über ein Festlager im jeweiligen Gehäuseteil verbunden, wobei die Gehäuseteile miteinander schraubverbunden sind. Das Zwischenteil ist hierbei vorzugsweise als Spritzgussteil ausführbar.

Die Erfindung wird nun anhand von Abbildungen näher erläutert:

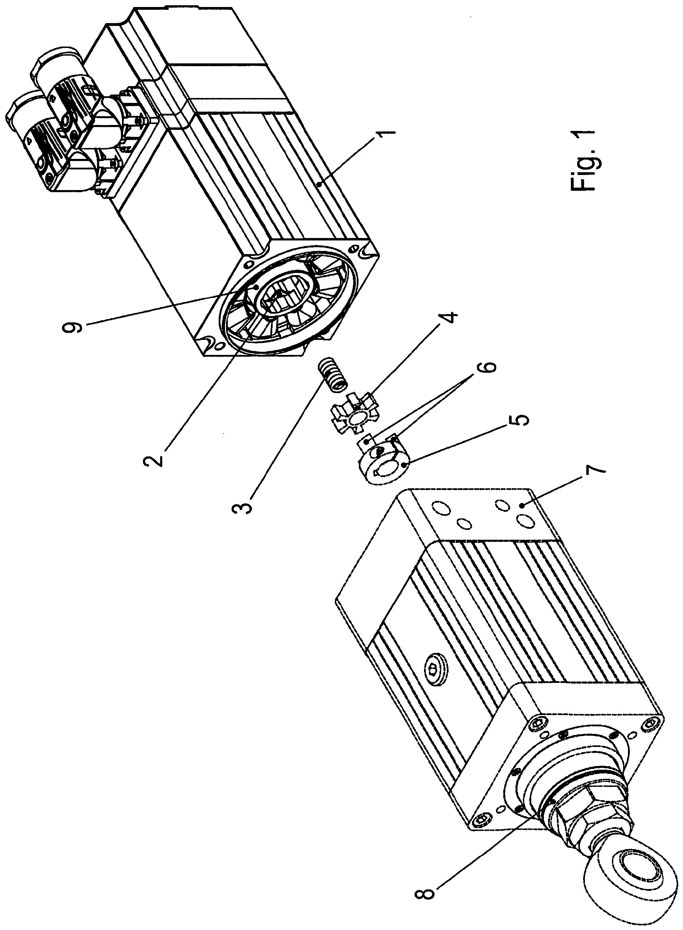

In der Figur 1 ist eine erfindungsgemäße Antriebsanordnung in explodierter Schrägansicht dargestellt, wobei ein Spindeltrieb von einem Elektromotor antreibbar ist.

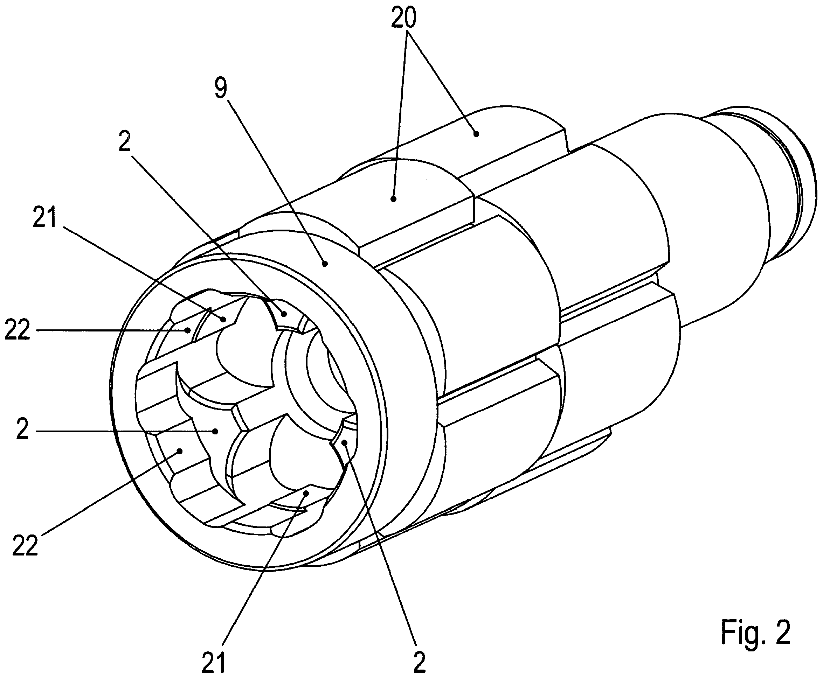

In Figur 2 ist die Rotorwelle des Elektromotors in Schrägansicht gezeigt.

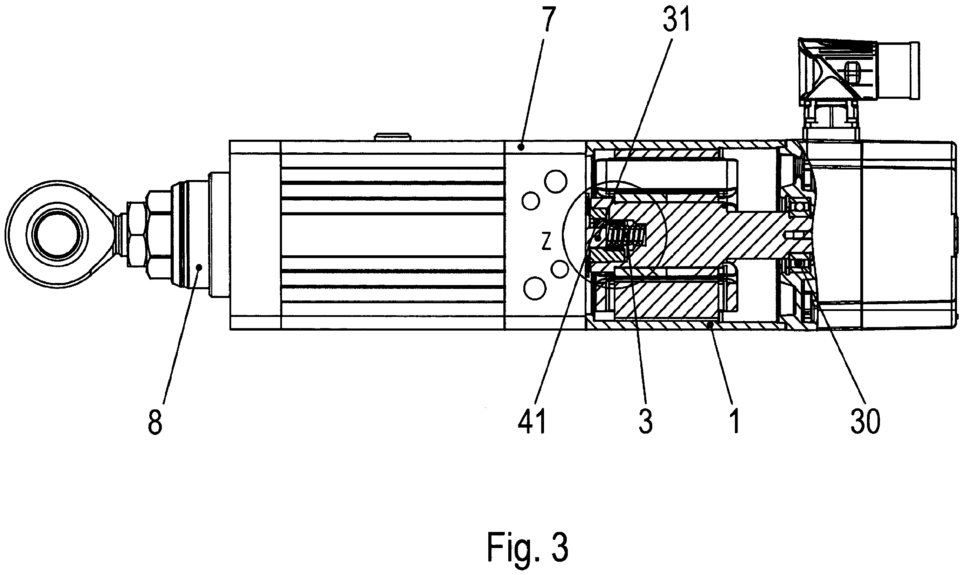

In Figur 3 ist eine zugehörige Schnittansicht gezeigt.

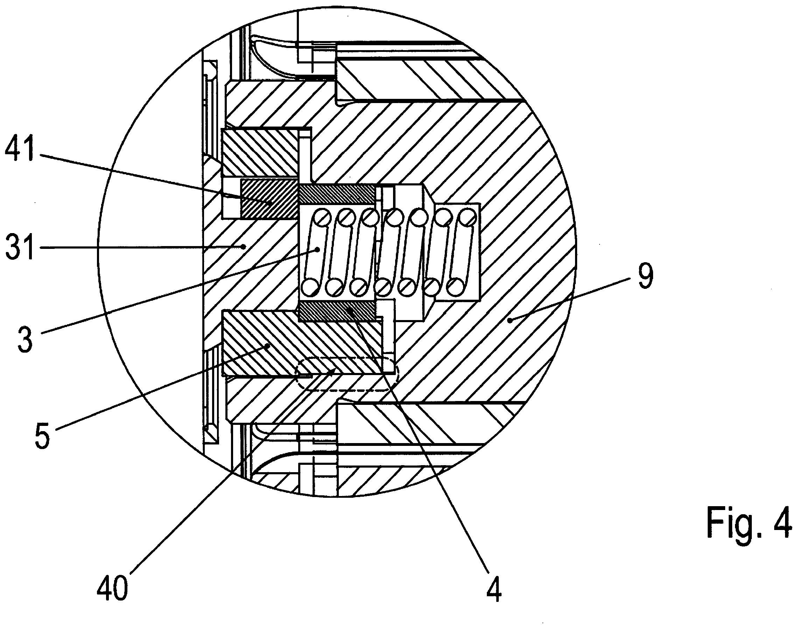

In Figur 4 ist ein Ausschnitt der Figur 3 vergrößert dargestellt,

Wie in den Figuren gezeigt, weist die Antriebsanordnung einen Elektromotor auf, der eine Rotorwelle 9 aufweist, die über ein in einem Gehäuseteil 1 aufgenommenen Lager 30 als erste Lagerstelle gelagert ist.

Das Lager 30 fungiert als Festlager des Elektromotors. Hierzu ist der Außenring des Lagers 30 gegen eine Stufenbohrung angestellt und der Innenring gegen eine Durchmesserstufe der Rotorwelle 9.

An ihrem vom Lager 30 axial abgewandten Endbereich ist die Rotorwelle 9 mittels einer Kupplung mit einer Gewindespindel 31 verbunden, die in einem Gehäuseteil 7 des Spindeltriebs drehbar gelagert ist.

Somit ist die Rotorwelle 9 über die Gewindespindel 31 an zumindest einer zweiten Lagerstelle gelagert. Denn die Lagerung der Gewindespindel 31 fungiert auch als Lagerstelle für die mit der Gewindespindel 31 über die Kupplung verbundene Rotorwelle 9.

Über die Kupplung ist die Rotorwelle 9 mit der Gewindespindel 31 drehfest verbunden, wobei die Kupplung spielarm ausgeführt ist oder spielfrei.

Eine mit dem Gewinde der Gewindespindel 31 in Eingriff sich befindende Spindelmutter ist im Gehäuse des Spindeltriebs axial geführt und ist somit je nach Drehrichtung der Rotorwelle 9 axial hin- oder herbewegbar. Mit der Spindelmutter ist die Kolbenstange 8 verbunden und somit ebenfalls axial hin- oder herbewegbar.

Die Kupplung weist ein Kupplungsteil 5 mit Klauenabschnitten 6 auf, wobei das Kupplungsteil 5 eine mittig angeordnete Bohrung aufweist, mit welcher es auf den Wellenstumpf-förmigen axialen, dem Motor zugewandten Endabschnitt der Gewindespindel 31 aufgesteckt ist und drehfest verbunden ist. Hierzu ist eine Passfeder 41 zur spielbehafteten formschlüssigen Verbindung zwischen Gewindespindel 31 und Kupplungsteil 5 vorgesehen und außerdem ist das Kupplungsteil 5 als Klemmnabe ausgeführt und kraftschlüssig verbunden mit der Gewindespindel 31. Somit kommt bei Versagen der kraftschlüssigen Verbindung die formschlüssige Verbindung zur Wirkung.

Die Kupplung ist als Klauenkupplung ausgebildet, wobei das Kupplungsteil 5 Klauenabschnitte 6 aufweist, die axial hervorragen aus dem sonstigen Kupplungsteil 5, also Grundkörper, und in Umfangsrichtung voneinander regelmäßig beabstandet sind.

An der Rotorwelle 9 ist der dem Spindeltrieb zugewandte Endberiech hohl ausgeführt, wobei an der Wandung des Hohlbereichs nach radial innen hervorragende Klauenabschnitte 2 ausgebildet sind, die in Umfangsrichtung regelmäßig voneinander beabstandet sind. Die an der Rotorwelle 9 ausgebildeten Klauenabschnitte 2 ragen somit in die Zwischenraum bereiche hinein, welche sich in Umfangsrichtung zwischen den Klauenabschnitten 6 des Kupplungsteils 5 erstrecken.

Somit überlappt der axial und radial von den Klauenabschnitten 2 überdeckte Bereich mit dem axial und radial von den Klauenabschnitten 6 überdeckten Bereich.

Allerdings berühren sich die Klauenabschnitte 2 und 6 einander nicht, sondern zwischen ihnen sind die Strahlenabschnitte eines sternförmigen Zwischenteils 4 angeordnet. Hierbei erstrecken sich die Strahlenabschnitte in radialer Richtung von einem ringförmigen Grundkörper aus. Das Zwischenteil 4 ist aus Kunststoff ausgebildet und somit elastischer als die aus Metall, insbesondere Stahl oder Aluminium ausgebildeten Klauenabschnitte 2 und 6. Vorzugsweise ist der Kunststoff ein Elastomer.

Die Wandung des an der Rotorwelle 9 ausgeformten Hohlraums umgibt somit das Zwischenteil 4 und die Klauenabschnitte 6 radial. Denn das Zwischenteil 4 und die Klauenabschnitte 6 sind im Hohlraum angeordnet.

Ein Federelement 3 ist mittig im Kupplungsberiech angeordnet und stützt sich an der Rotorwelle 9 und an der Gewindespindel 31 ab.

Hierbei drückt das Federelement 3 die Rotorwelle 9 am Boden des Hohlraums der Rotorwelle 9 von dem Spindeltrieb weg. Somit ist-bewirkt das Federelement 3 die Anstellung des als Festlager vorgesehenen Lagers 30.

Der vom Hohlraum überdeckte axiale Bereich überlappt mit dem von den Statorwicklungen überdeckten axialen Bereich.

Auf der Motor abgewandten Seite ist das Federelement 3 abgestützt an einer Stirnfläche der Gewindespindel 31, insbesondere an einer dem Motor zugewandten Stirnfläche des an der Gewindespindel 31 ausgebildeten Wellenstumpfes.

Am äußeren Umfang der Rotorwelle 9 sind Dauermagnete 20 angeordnet, insbesondere klebeverbunden mit der Rotorwelle 9.

Die Klauenabsclinitte 6 des Kupplungsteils 5 liegen insbesondere mit ihrer radial äußeren Berandung an einem Zentriersitz 40 an der Rotorwelle 9 an. Hierzu ist die Berandung des Hohlraums fein bearbeitet, insbesondere geschliffen oder zumindest drehend bearbeitet. An einer jeweils fein bearbeiteten Fläche 21 liegt ein jeweiliger Klauenabschnitt 6 an, so dass das Kupplungsteil 5 zentriert ist gegenüber der Rotorwelle 9.

Darüber hinaus liegt der ringförmige Grundkörper des Kupplungsteils 5 an mehreren, in Umfangsrichtung voneinander beabstandeten, insbesondere regelmäßig beabstandeten, fein bearbeiteten Flächen 22 des Hohlraums der Rotorwelle 9 an, wobei diese Flächen axial beabstandet sind von den obengenannten fein bearbeiteten Flächen 21. In einem jeweiligen Umfangswinkelbereich in Umfangsrichtung vor und hinter der jeweiligen Fläche 22 weist der Hohlraum einen größeren Durchmesser auf, so dass diese Flächen 22 radial nach innen hervorstehend angeordnet sind. Ebenso sind auch die Flächen 21 exponiert angeordnet, also nach radial innen hervorstehend angeordnet, weil auch hier in einem jeweiligen Umfangswinkelbereich in Umfangsrichtung vor und hinter den Flächen 21 der Hohlraum einen größeren Durchmesser aufweist.

Bei dem erfindungsgemäßen Linearantrieb ist zwischen Elektromotor und Gewindespindel eine Klauenkupplung angeordnet, deren Kupplungsteil 5 in Wirkverbindung ist mit an der Rotorwelle 9 ausgeformten Klauenabschnitten 2. Außerdem ist das Kupplungsteil 5 zentriert an der Rotorwelle 9 und mittig innerhalb der Kupplung ist eine Druckfeder 3 angeordnet, welche die Anstellung eines Festlagers der Rotorwelle 9 bewirkt.

Dadurch, dass die Gewindespindel 31 und die Rotorwelle 9 jeweils über ein Festlager gelagert sind, fungiert die Kupplung, insbesondere das Zwischenteil der Kupplung, zum Ausgleich der thermisch bedingten Längenveränderungen. Die eigentliche Funktion einer üblichen Kupplung, also der Ausgleich der Abweichungen von der Koaxialität, ist unbedeutend bei der Erfindung, weil das Zwischenteil drehsteif ausgeführt ist und das Kupplungsteil insbesondere mit seinen Klauenabschnitten an der Rotorwelle 9 mittels des Zentriersitzes zentriert ist. Die Kupplung ist sozusagen mechanisch kurzgeschlossen. Sie wird aber benötigt, um die thermisch bedingten Längenveränderungen auszugleichen.

Die Festlager bieten den Vorteil, dass die Komponenten, wie Spindeltrieb oder Elektromotor, in einer umfassenden Baureihe auch für anderer Antriebsvarianten einsetzbar sind. Beispielsweise ist der Elektromotor A-seitig mit einem Lagerschild anstatt dem Spindeltrieb versehbar zur Bildung eines Standard-Elektromotors, der wiederum mit einem Getriebe verbindbar ist.

### Bezugszeichen liste

1 Gehäuseteil
2 Klauenabschnitt
3 Federelement
4 Zwischenteil
5 Kupplungsteil mit Klauenabschnitt 6
6 Klauenabschnitt
7 Spindeltriebgehäuseteit
8 Kolbenstange
9 Rotorwelle
20 Dauermagnete
21 bearbeitete Fläche
22 bearbeitete Fläche
30 Lager
31 Gewindespindel
40 Zentriersitz
41 Passfeder

## Patentansprüche

1. Linearantrieb, aufweisend einen von einem Elektromotor über eine Kupplung angetriebenen Spindeltrieb,
wobei der Elektromotor eine mittels eines Lagers drehbar gelagerte Rotorwelle (9) aufweist,
wobei der Spindeltrieb eine mittels einer Klauenkupplung mit der Rotorwelle (9), drehfest, verbundene Gewindespindel aufweist,
wobei die Kupplung ein drehfest mit der Gewindespindel verbundenes Kupplungsteil (5) mit einem auf einen als Zentriersitz bearbeiteten Wellenstumpf der Gewindespindel aufgeschobenen, ringförmigen Grundkörper und mit axial vom Grundkörper hervorragenden ersten Klauenabschnitten (6) aufweist,
wobei die Rotorwelle (9) an der dem Spindeltrieb zugewandte Ende hohl ausgeführt ist, so dass sie dort einen axial nicht durchgehenden Hohlraum aufweist,
wobei die Lagerung der Gewindespindel als zweites Lager (30) für die Rotorwelle (9) fungiert,
**dadurch gekennzeichnet, dass**
an der Wandung des Hohlraums nach radial innen hervorragende zweite Klauenabschnitte (2) ausgebildet sind, welche über ein zwischengeordnetes, drehsteifes Zwischenteil (4) im Eingriff stehen mit den ersten Klauenabschnitten (2) des Kupplungsteils (5),
wobei die Rotorwelle (9) einen Zentriersitz (40) aufweist, in welchem die Klauenabschnitte (6) des Kupplungsteils aufgenommen sind,
wobei die radiale Berandung des Hohlraums fein bearbeitete Flächenabschnitte aufweist, die als Zentriersitz (40) für die Klauenabschnitte (6) fungieren, wobei der Zentriersitz als Passitz für die Klauenabschnitte des Kupplungsteils (5) ausgebildet sind, um das Kupplungsteil (5) an der Rotorwelle (9) zu zentrieren.

2. Linearantrieb nach Anspruch 1,
**dadurch gekennzeichnet, dass**
das Lager (30) als Festlager ausgeführt ist.

3. Linearantrieb nach mindestens einem der vorangegangenen Ansprüche,
**dadurch gekennzeichnet, dass**
die Rotorwelle (9) über das Lager (30) in einem Gehäuseteil (1) des Elektromotors drehbar gelagert ist und die Gewindespindel über weitere Lager, insbesondere über zumindest ein weiteres als Festlager ausgeführtes Lager, in einem Gehäuseteil (1) des Spindeltriebs gelagert ist, wobei die Gehäuseteile (1) verbunden sind, insbesondere schraubverbunden sind.

4. Linearantrieb nach mindestens einem der vorangegangenen Ansprüche,
**dadurch gekennzeichnet, dass**
ein Federelement (3) die Rotorwelle (9) zum Lager (30) hindrückt, wobei das Federelement (3) an der Gewindespindel abgestützt ist,
insbesondere wobei die Rotorwelle (9) eine Durchmesserstufe aufweist, gegen welche der Innenring des Lagers (30) angestellt ist und das Gehäuseteil (1) des Elektromotors eine Stufe aufweist, gegen welche der Außendurchmesser des Lagers (30) angestellt ist.

5. Linearantrieb nach mindestens einem der vorangegangenen Ansprüche,
**dadurch gekennzeichnet, dass**
die radiale Außenseite der Klauenabschnitte (2, 6) des Kupplungsteils an den fein bearbeiteten Flächenabschnitten der Berandung des Hohlraumes anliegen,
insbesondere wobei die Flächenabschnitte in Umfangsrichtung voneinander insbesondere regelmäßig beabstandet sind.

6. Linearantrieb nach mindestens einem der vorangegangenen Ansprüche,
**dadurch gekennzeichnet, dass**
eine mit dem Gewinde der Gewindespindel im Eingriff stehende Spindelmutter linear geführt ist im Gehäuseteil (1) des Spindeltriebs und mit einer aus dem Gehäuse des Spindeltriebs herausragenden Kolbenstange (8) verbunden ist.

7. Linearantrieb nach mindestens einem der vorangegangenen Ansprüche,
**dadurch gekennzeichnet, dass**
das Zwischenteil (4) aus einem Material höherer Elastizität gefertigt ist als die Kupplungsabschnitte des Kupplungsteils und der Rotorwelle (9).

## Claims

1. A linear drive, having a spindle mechanism which is driven by an electric motor via a coupling,
wherein the electric motor has a rotor shaft (9) rotatably mounted by means of a bearing,
wherein the spindle mechanism has a threaded spindle connected, non-rotatably, to the rotor shaft (9) by means of a claw coupling,
wherein the coupling has a coupling part (5), connected non-rotatably to the threaded spindle, with an annular base body which is pushed onto a shaft stub of the threaded spindle which is machined as a centring seat and with first claw portions (6) projecting axially from the base body,
wherein the rotor shaft (9) is made hollow on that end which faces the spindle mechanism, so that it has an axially non-continuous cavity there,
wherein the mounting of the threaded spindle acts as a second bearing (30) for the rotor shaft (9),
**characterised in that**
second claw portions (2) projecting radially inwards are formed on the wall of the cavity, which claw portions are engaged via an interposed, torsionally rigid intermediate part (4) with the first claw portions (2) of the coupling part (5),
with the rotor shaft (9) having a centring seat (40) in which the claw portions (6) of the coupling part are received,
with the radial margin of the cavity having finish-machined face portions which act as a centring seat (40) for the claw portions (6), with the centring seat being formed as a snug fit for the claw portions of the coupling part (5) in order to centre the coupling part (5) on the rotor shaft (9).

2. A linear drive according to claim 1,
**characterised in that**
the bearing (30) is embodied as a fixed bearing.

3. A linear drive according to at least one of the preceding claims,
**characterised in that**
the rotor shaft (9) is rotatably mounted in a housing part (1) of the electric motor via the bearing (30) and the threaded spindle is borne, via further bearings, in particular via at least one further bearing embodied as a fixed bearing, in a housing part (1) of the spindle mechanism, with the housing parts (1) being connected, in particular being screw-connected.

4. A linear drive according to at least one of the preceding claims,
**characterised in that**
a spring element (3) presses the rotor shaft (9) towards the bearing (30), with the spring element (3) being supported on the threaded spindle,
in particular with the rotor shaft (9) having a diameter step against which the inner ring of the bearing (30) is positioned, and the housing part (1) of the electric motor having a step against which the external diameter of the bearing (30) is positioned.

5. A linear drive according to at least one of the preceding claims,
**characterised in that**
the radial outer side of the claw portions (2, 6) of the coupling part rests against the finish-machined face portions of the margin of the cavity,
in particular with the face portions being in particular regularly spaced apart from each other in the peripheral direction.

6. A linear drive according to at least one of the preceding claims,
**characterised in that**
a spindle nut engaged with the thread of the threaded spindle is linearly guided in the housing part (1) of the spindle mechanism and is connected to a piston rod (8) projecting out of the housing of the spindle mechanism.

7. A linear drive according to at least one of the preceding claims,
**characterised in that**
the intermediate part (4) is manufactured from a material of greater elasticity than the coupling portions of the coupling part and of the rotor shaft (9).

## Revendications

1. Entraînement linéaire équipé d'un mécanisme à broche entraîné par un moteur électrique, par l'intermédiaire d'un accouplement,
ledit moteur électrique comportant un arbre rotorique (9) monté à rotation au moyen d'un palier,
ledit mécanisme à broche étant pourvu d'une broche filetée reliée audit arbre rotorique (9) avec verrouillage rotatif, au moyen d'un accouplement à griffes,
l'accouplement étant muni d'une pièce d'accouplement (5) qui est reliée à ladite broche filetée, avec verrouillage rotatif, et est dotée d'un corps annulaire de base enfilé sur un bout d'arbre de la broche filetée, usiné en tant que siège de centrage, et de premières zones à griffes (6) faisant saillie axialement au-delà dudit corps de base,
sachant que l'arbre rotorique (9) est de réalisation creuse à l'extrémité tournée vers le mécanisme à broche, de sorte qu'il présente, dans cette région, une cavité non continue dans le sens axial,
l'agencement de montage de la broche filetée remplissant la fonction d'un second palier (30) dévolu audit arbre rotorique (9),
**caractérisé par le fait que**
des secondes zones à griffes (2) faisant saillie radialement vers l'intérieur, façonnées sur la paroi de la cavité, sont en prise avec les premières zones à griffes (6) de la pièce d'accouplement (5) par l'entremise d'une pièce intermédiaire (4) interposée, rigide en torsion,
l'arbre rotorique (9) étant muni d'un siège de centrage (40) dans lequel lesdites zones à griffes (6) de la pièce d'accouplement sont logées,
sachant que la délimitation marginale radiale de ladite cavité comporte des régions superficielles à usinage fin qui remplissent une fonction de siège de centrage (40) affecté auxdites zones à griffes (6), lequel siège de centrage est conçu en tant qu'ajustement serré dédié aux zones à griffes de la pièce d'accouplement (5), en vue de centrer ladite pièce d'accouplement (5) sur ledit arbre rotorique (9).

2. Entraînement linéaire selon la revendication 1,
**caractérisé par le fait que**
le palier (30) est réalisé en tant que palier fixe.

3. Entraînement linéaire selon au moins l'une des revendications précédentes, **caractérisé par le fait que**
l'arbre rotorique (9) est monté à rotation, par l'intermédiaire du palier (30), dans une partie (1) formant carter du moteur électrique et la broche filetée est montée, par l'intermédiaire de paliers supplémentaires, en particulier par l'entremise d'au moins un palier supplémentaire réalisé en tant que palier fixe, dans une partie (1) formant carter du mécanisme à broche, lesdites parties (1) formant carters étant solidarisées, notamment solidarisées par vissage.

4. Entraînement linéaire selon au moins l'une des revendications précédentes, **caractérisé par le fait**
**qu'**un élément élastique (3) pousse l'arbre rotorique (9) en direction du palier (30), lequel élément élastique (3) est en appui contre la broche filetée,
sachant notamment que ledit arbre rotorique (9) est muni d'un épaulement diamétral contre lequel porte la bague intérieure dudit palier (30), et que la partie (1) formant carter du moteur électrique est pourvue d'un épaulement contre lequel porte le diamètre extérieur dudit palier (30).

5. Entraînement linéaire selon au moins l'une des revendications précédentes, **caractérisé par le fait que**
la face extérieure radiale des zones à griffes (2, 6) de la pièce d'accouplement est en applique contre les régions superficielles à usinage fin de la délimitation marginale de la cavité,
sachant notamment que lesdites régions superficielles sont mutuellement espacées dans la direction du pourtour, en particulier de façon régulière.

6. Entraînement linéaire selon au moins l'une des revendications précédentes, **caractérisé par le fait**
**qu'**un écrou de broche, en prise avec le filetage de la broche filetée, est guidé linéairement dans la partie (1) formant carter du mécanisme à broche, et est relié à une tige (8) de piston faisant saillie au-delà du carter dudit mécanisme à broche.

7. Entraînement linéaire selon au moins l'une des revendications précédentes, **caractérisé par le fait que**
la pièce intermédiaire (4) est fabriquée en un matériau doué d'une élasticité supérieure à celles des zones d'accouplement de la pièce d'accouplement, et de l'arbre rotorique (9).
